# EUROPÄISCHE PATENTSCHRIFT

(11) **EP 0 779 202 B1**
(45) Veröffentlichungstag und Bekanntmachung des Hinweises auf die Patenterteilung: **01.12.1999**
(21) Anmeldenummer: 96115021.6
(22) Anmeldetag: 19.09.1996
(51) Int. Cl.: B62D 25/00, B62D 33/04, A62C 27/00

(54) **Einsatzfahrzeug**
Emergency vehicle
Véhicule d'intervention

(30) Priorität: 13.12.1995 DE 19546458
(43) Veröffentlichungstag der Anmeldung: 18.06.1997
(73) Patentinhaber: Metz Feuerwehrtechnik GmbH & Co. KG, 76185 Karlsruhe (DE)
(72) Erfinder: Bruder, Detlef, 76199 Karlsruhe (DE)
(74) Vertreter: Lempert, Jost, Dipl.-Phys. Dr. rer.nat.

(56) Entgegenhaltungen:
- EP-A- 0 541 485
- EP-A- 0 645 299
- DE-A- 2 741 126
- US-A- 5 474 331

## Beschreibung

Die Erfindung betrifft ein Einsatzfahrzeug, insbesondere Feuerwehrfahrzeug mit einem Bodenrahmen und mit einem Aufbaugerippe aus miteinander verbundenen Profilen, das die Boden-, Dach- und Seitenelemente der Fahrzeugaufbauten aufnimmt.

Bei bekannten Einsatzfahrzeugen mit einem Aufbaugerippe ist dieses vollständig aus Aluminiumprofilen gebildet. Diese einzelnen Aluminiumprofile sind dabei durch Verschrauben aneinander festgelegt. Die Wandteile des Fahrzeugaufbaus werden durch ebenfalls aus Aluminium bestehende Bleche gebildet, die als Verkleidung am Gerippe festgeklebt bzw. angeklebt werden. Durch diesen vollständigen Aluminiumaufbau in geschraubter Ausführung wird zwar ein leichter und modularer Aufbau erhalten, jedoch bedarf das Setzverhalten der Schraubverbindungen, vor allem im Aluminium, der Wartung. Durch ungesicherte Schraubverbindungen und/oder durch mangelnde Wartung wird die Festigkeit des Aufbau gefährdet. Außerdem weist der Bodenrahmen, in den die Krafteinleitung des Fahrwerks erfolgt, aufgrund seiner Aluminiumausführung ein ungünstiges Elastizitätsverhalten auf.

Ein anderes bekanntes Fahrzeug weist einen kompletten Aluminiumaufbau in geschweißter Spantenbauweise auf. Hierzu werden unter anderem Aluminium-Sandwichplatten mit Wabenkern verwendet. Ein solcher Fahrzeugaufbau ist gegenüber dem vorgenannten wartungsfrei sowie ebenfalls leicht ausgebildet, aber auch hier erfolgt die Krafteinleitung durch das Fahrwerk in einen Werkstoff mit ungünstigem Elastizitätsverhalten. Des weiteren ist die Flexibilität des Innenausbaus durch die fest vorgegebenen Spantenwände eingeschränkt.

Einen entsprechenden Aufbau für Fahrzeuge zur technischen Hilfeleistung mit einem Tragrahmen in Form einer Gitterstruktur, der vollständig aus Leichtmetall besteht, zeigt die DE 27 41 126 A1.

Die US 5 474 331 zeigt einen Anhänger (Trailer) mit Stahlträgern, an denen über sogenannte BI-Elemente aus Stahl und Aluminium andere Teile, nämlich Kreuzrahmenglieder befestigt sind, die aus Aluminiumlegierung bestehen können.

Der Erfindung liegt nun die Aufgabe zugrunde, unter Vermeidung der vorgenannten Nachteile ein Einsatzfahrzeug der eingangs genannten Art zu schaffen, das ein Aufbaugerippe für Fahrzeugaufbauten mit geringem Gewicht bei stabiler wartungsfreier Verbindung der Bauteile sowie günstigem Elastizitätsverhalten aufweist.

Erfindungsgemäß wird die genannte Aufgabe durch ein Einsatzfahrzeug der eingangs genannten Art dadurch gelöst, daß die die tragenden Elemente des Aufbaugerippes bildenden Profile aus Stahl und die das Dach sowie die seitliche Umhüllung bildenden Profile aus Aluminium sind. Aufgrund der erfindungsgemäßen Ausgestaltung sind also insbesondere der Bodenrahmen sowie die Mittelverstrebungen aus Stahl, so daß diese Bauteile, in die beispielsweise die Krafteinleitung durch das Fahrwerk erfolgt, sich durch ein günstiges Elastizitätsverhalten auszeichnen. Des weiteren kann die Hauptabstützung des Eigengewichts auch bei Beladung optimal über den Bodenrahmen sowie Mittelverstrebungen erfolgen. Es sind so hochbelastbare Aufbaugerippe geschaffen, wobei gleichzeitig durch die Verwendung von Aluminium für das Dachgerippe sowie die Umhüllung eine erhebliche Gewichtsreduktion erfolgt. Gleichzeitig bleibt die Möglichkeit für einen flexiblen Innenausbau erhalten, da durch die Ausführung mit Aluminium- und Stahlprofilen ein modularer Aufbau gegeben ist. Türen, Wandflächen etc. sowie andere Verschlüsse können je nach Wunsch am Aufbaugerippe festgelegt werden. Entsprechend können dann Lade- sowie Geräteräume und auch Mannschaftskabinen flexibel gestaltet werden.

Bevorzugt sind die Profile des Aufbaugerippes durch Verschweißen aneinander festgelegt. Auf diese Weise sind innerhalb des Aufbaugerippes selbst keinerlei Schraubverbindungen mit den damit verbundenen Nachteilen erforderlich. Durch die Verschweißung der Knotenstellen bzw. Verbindungsbereiche wird für die maximale Steifigkeit des Aufbaugerippes bei minimalem Eigengewicht gesorgt.

Um auch an den Verbindungsstellen bzw. Knotenstellen zwischen Aluminium-Profilen und Stahlprofilen für eine wartungsfreie, stabile Schweißverbindung zu sorgen, sind an den Verbindungs- bzw. Knotenstellen zwischen Aluminium- und Stahlprofilen angeordnete Schweißverbinder vorgesehen. Aufgrund dieser Schweißverbinder kann eine optimale Festlegung der Aluminiu-Profile sowie der Stahlprofile aneinander erfolgen.

Weiterbildungen sehen vor, daß der Bodenrahmen des Aufbaugerippes durch Verschrauben an einem mit dem Fahrzeugchassis verbundenen Grundrahmen festgelegt ist. Dieser Grundrahmen besteht dabei bevorzugt ebenfalls aus Stahl.

Die die Wandteile des Fahrzeugs bildenden Wände können aus Holz (Sperrholz), Kunststoff oder auch Metall (Al, Stahl) sowie aber auch aus sandwichartigen Verbundplatten sein. Die Verbundplatten bestehen aus zwei dünnen Deckplatten mit einem stützenden Kern. Die Materialen der Deckplatten können Holz, Kunststoff, Metall, Blech (Al, Stahl), auch in Kombination, sein. Der stützende Kern kann in verschiedener geometrischer Struktur ausgebildet sein oder aus Vollmaterial bestehen wie geschäumtem Kunststoff, Holz. Die Verbundplatte erhält so eine hohe Biegesteifigkeit bei geringem Gewicht. Derart wird eine hohe Eigensteifigkeit bei leichter Bauweise erreicht. Zur Erhöhung der Steifigkeit, insbesondere des Daches, kann ein Blech als äußerer Abschluß, als Witterungsschutz oder als Trittfläche aufgeklebt werden.

Die Wandteile, bevorzugt aus Aluminium-Verbundplatten, sind dabei am Aufbaugerippe in Weiterbildung durch Verkleben festgelegt. Ein Verschweißen der Wandteile, wie beim Stand der Technik, ist nicht notwendig, da Belastungen über das Aufbaugerippe und dessen Profile aufgenommen werden.

Insgesamt ist so ein Einsatzfahrzeug geschaffen, dessen das Aufbaugerippe bildende Bauteile zum einen für ein günstiges Elastizitätsverhalten in den Bereichen sorgen, in die eine Krafteinleitung vom Fahrwerk und Innenausbau her erfolgt, zum anderen eine wartungsfreie, stabile Verbindung der einzelnen Profile bei gleichzeitig hoher Gewichtsreduktion ermöglichen.

Weitere Vorteile und Merkmale der Erfindung ergeben sich aus den Ansprüchen und aus der nachfolgenden Beschreibung, in der Ausführungsbeispiele unter Bezugnahme auf die beigefügten Zeichnungen im einzelnen erläutert sind. Dabei zeigt bzw. zeigen:
- Fig. 1: eine perspektivische Ansicht mit prinzipiellen Ausführungsformen eines Aufbaugerippes;
- Fig. 2: eine spezielle Ausführungsform eines Aufbaugerippes;
- Fig. 3: eine Knotenstelle zwischen einem Aluminium-Profil und Stahlprofilen; und
- Fig. 4, 5, 6: verschiedene Verklebungsstellen zwischen Wandteilen und Aufbaugerippeprofilen;
- Fig. 7, 8: Beispiele der Anbindung von Wandteilen an Profile.

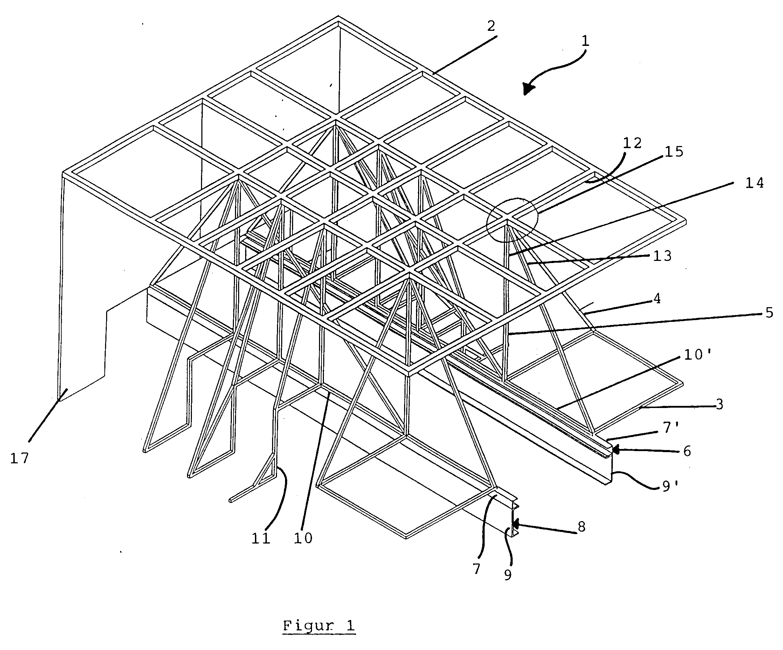

Das in Fig. 1 dargestellte Aufbaugerippe 1 für Fahrzeugaufbauten eines Einsatzfahrzeuges, wie eines Feuerwehrfahrzeuges, weist im dargestellten Ausführungsbeispiel einen Dachrahmen bzw. ein Dachgerippe 2 und einen Bodenrahmen bzw. ein Bodengerippe 3 auf, die über Streben 4 und Vertikalträger 5 miteinander verbunden sind. Der Bodenrahmen 3 ist als eine Einheit auf einem Grundrahmen 6 mit zwei Längsträgern 7, 7' befestigt, welcher wiederum fest mit dem Chassisrahmen 8 aus zwei Längsträger 9, 9' des Fahrgestells des Einsatzfahrzeuges fest verbunden ist. Die Verbindung zwischen dem Bodenrahmen 3, der hierzu Längsträger bzw. Längsprofile 10 aufweist, den Längsträgern 7, 7' des Grundrahmens 6 sowie den Längsträgern 9, 9' des Chassisrahmens 8 erfolgt durch Verschrauben. Der Bodenrahmen 3, der Grundrahmen 6 sowie der Chassisrahmen 8 bestehen dabei aus Stahl.

Der im Bereich zwischen den Längsträgern 10, 10' keine Profile aufweisende Bodenrahmen 3 ist im Bereich außerhalb der Radkästen des Einsatzfahrzeuges gegenüber dem Grundrahmen 6 abgesenkt. Die Absenkung kann bis auf eine durch die erforderliche Bodenfreiheit des Fahrzeugs bestimmte Höhe erfolgen. Die Absenkung geschieht dabei derart, daß an den Längsprofilen 10, 10' des Bodenrahmens 3 Winkelträger 11 angeordnet sind, die den Boden stufenförmig absenken.

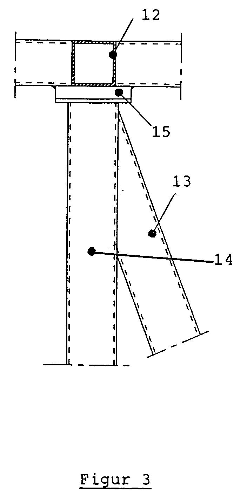

Sämtliche Profile des Bodenrahmens 3 sind durch Verschweißen aneinander festgelegt. Die Streben 4 sowie Vertikalprofile 5 sind ebenfalls aneinander sowie am Bodenrahmen 3 durch Verschweißen festgelegt. Die Streben 4 und Vertikalträger 5 bestehen dabei ebenfalls aus Stahl. Das aus Aluminiumprofilen gefertigte Dachgerippe 2 ist an der Oberseite der Streben 4 sowie Vertikalprofile 5 ebenfalls durch Verschweißen an diesen festgelegt, wobei zwischen den Aluminiumprofilen 12 des Dachgerippes 2 und den Stahlprofilen 13, 14 der Vertikalträger 5 bzw. Streben 4 an den Verbindungsstellen 16 Schweißverbinder 15 angeordnet sind. Die Aluminiumprofile 12 sind dabei an einer Seite des Schweißverbinders 15 durch Verschweißen festgelegt, die Stahlprofile 13, 14 an dessen anderer Seite (s. Fig. 3).

An das Aufbaugerippe 1 sind Wandteile 17 aus Aluminium in Form von Sandwichplatten durch Verkleben festgelegt.

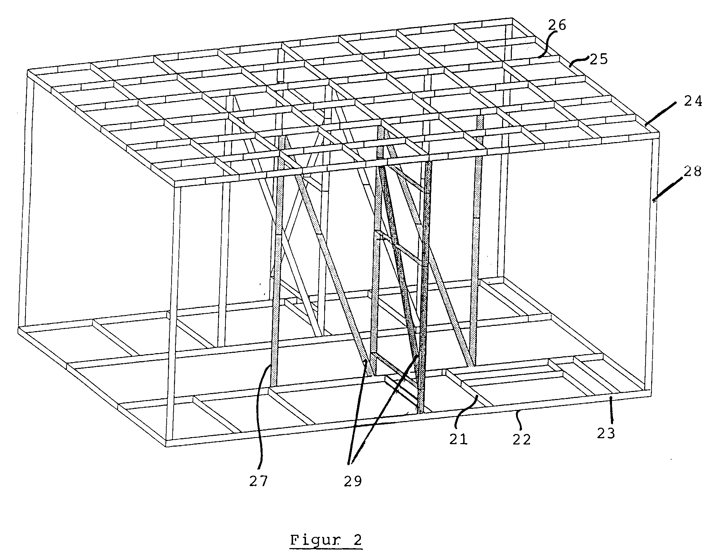

Bei der in Fig. 2 dargestellten Ausführungsform wird der Bodenrahmen 23 aus Stahlprofilen in Form von Längs- und Querträgern 21, 22 gebildet, die durch Verschweißen aneinander festgelegt sind. Das Dach bzw. Dachgerippe 24 ist aus miteinander verschweißten Längs- und Querprofilen 25, 26 gebildet. Das Dachgerippe 24 sowie der Bodenrahmen 23 sind über Vertikalträger 27, 28 sowie Streben 29 verbunden, wobei die als tragende Elemente dienenden Vertikalträger 27 und die Streben 29 aus Stahl, die Eckverbinder 28 jedoch aus Aluminium sind. Die Verbindung der Aluminium-Profile sowie die Stahlprofile untereinander sowie die Verbindung zwischen Aluminium-Profilen und Stahlprofilen erfolgt durch Verschweißen auf die vorangehend beschriebene Weise.

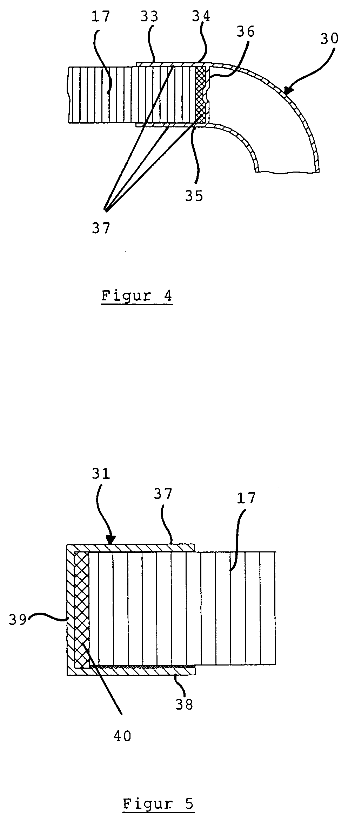

Wie den Fig. 4-6 zu entnehmen ist, kann das Aufbaugerippe 1 unterschiedlichste Profile 30, 31, 32 zur Festlegung der Wandteile 17 am Aufbaugerippe 1 aufweisen. Bei dem in Fig. 4 dargestellten Profil 30 handelt es sich um ein im wesentlich rohrförmig gebogenes Profil, in dessen eines Ende 33 das Wandteil 17 eingeschoben ist. Das Profil 30 weist im Inneren eine die äußeren Wandteile 34, 35 verbindende Wandfläche 36 auf. Diese Wandteile 34, 35 sowie die Wandfläche 36 sind auf ihrer dem Wandteil 17 zugewandten Seite jeweils mit einer Klebeschicht 37 versehen. Die zwischen dem Wandteil 17 und der Wandfläche 36 vorgesehene Klebeschicht ist dabei dicker ausgebildet als diejenige an der Innenseite der Wandteile 34, 35. Die Wandfläche 17 wird durch die Wandteile 34, 35 formschlüssig umgeben.

Das in Fig. 5 dargestellte Profil 31 weist einen im wesentlichen U-förmigen Querschnitt auf, wobei das Wandteil 17 im wesentlichen formschlüssig zwischen den Schenkeln 37, 38 des Profils 31 eingeschoben ist. Zwischen dem die Schenkel 37, 38 verbindenden rückwärtigen Wandteil 39 und dem Wandteil 17 ist dabei zur Ausbildung einer Klebefläche ein Kleber 40 aufgebracht.

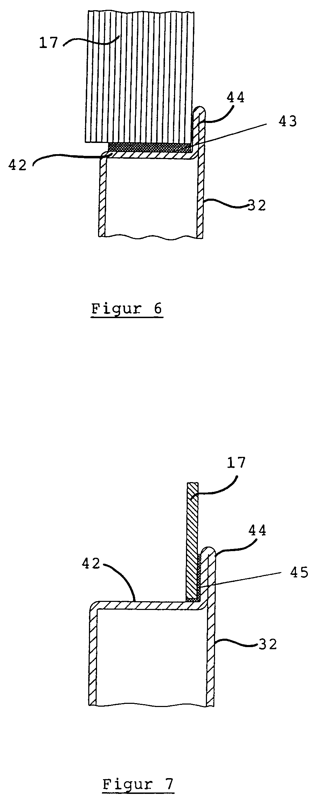

Bei dem in Fig. 6 dargestellten dritten Ausführungsbeispiel ist das Wandteil 17 an der Außenfläche 42 des Profils 32 unter Zwischenlage eines Klebers 43 festgelegt. Das Profil 32 weist hierbei einen im wesentlichen senkrecht zur Außenfläche 42 vorkragenden Schenkel 44 auf, der in Art einer Auffaltung erhalten ist und an dem das Wandteil 17 seitlich im wesentlichen formschlüssig anliegt.

Bei dem in Fig. 7 dargestellten Ausführungsbeispiel ist dabei der Kleber 45 zwischen dem Profil 32 und dem Wandteil 17 sowohl an der Außenfläche 42 als auch an der dem Wandteil 17 zugewandten Seite des Schenkels 44 angebracht. Hierdurch wird eine nichtlösbare Verbindung zwischen dem Wandteil 17 und dem Profil 32 geschaffen.

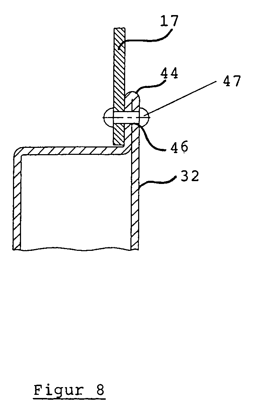

Für eine lösbare Verbindung zwischen dem Wandteil 17 und dem Profil 32 sind, wie in Fig. 8 dargestellt, das Wandteil 17 und der Schenkel 44 fluchtend zueinander mit einer Durchbohrung 46 versehen, durch die ein das Wandteil 17 und den Schenkel 44 an ihren einander abgewandten Seiten hintergreifender Niet 47 hindurchgeführt ist.

## Patentansprüche

1. Einsatzfahrzeug, insbesondere Feuerwehrfahrzeug, mit einem Bodenrahmen und mit einem Aufbaugerippe aus miteinander verbundenen Profilen, das die Boden-, Dach- und Seitenelemente der Fahrzeugaufbauten aufnimmt, dadurch gekennzeichnet, daß die die tragenden Elemente (3, 4, 5, 23, 27, 29) des Aufbaugerippes (1) bildenden Profile (10, 10', 13, 14, 21, 22) aus Stahl und die das Dach (2, 24) sowie die seitliche Umhüllung (28) bildenden Profile (12, 25, 26, 28) aus Aluminium sind.

2. Fahrzeug nach Anspruch 1, dadurch gekennzeichnet, daß die Profile (10, 10', 12, 13, 14, 25, 26) durch Verschweißen aneinander festgelegt sind.

3. Fahrzeug nach Anspruch 1 oder 2, gekennzeichnet durch an den Verbindungs- bzw. Knotenstellen (16) zwischen Aluminium-Profilen (12) und Stahlprofilen (13, 14) angeordnete Schweißverbinder (15).

4. Fahrzeug nach einem der Ansprüche 1 bis 3, dadurch gekennzeichnet, daß der Bodenrahmen (3) des Aufbaugerippes (1) durch Verschrauben an einem mit dem Fahrzeugchassis (8) verbundenen Grundrahmen (6) festgelegt ist.

5. Fahrzeug nach Anspruch 4, dadurch gekennzeichnet, daß der Grundrahmen (6) aus Stahl ist.

6. Fahrzeug nach einem der vorangehenden Ansprüche, dadurch gekennzeichnet, daß die Wandteile (17) durch Verkleben am Aufbaugerippe (1) festgelegt sind.

7. Fahrzeug nach Anspruch 6, dadurch gekennzeichnet, daß die Verklebestellen (37, 40, 42) der Wandteile (17) aus Profilen (30, 31, 32) verschiedener Materialien (Aluminium, Stahl, Kunststoff) und verschiedener Querschnittsformen bestehen, die mindestens einen zusätzlich zur Klebefläche einen Formschluß bewirkenden Schenkel (34, 35, 37, 38, 44, 45) aufweisen.

8. Fahrzeug nach Anspruch 6 oder 7, dadurch gekennzeichnet, daß Wandteile (17) ihre erhöhte Eigensteifigkeit durch eine lösbare oder nichtlösbare Anbindung an Profile (32) erhalten.

## Claims

1. Emergency vehicle, particularly firefighting vehicle, having a floor frame and with a structural framework of interconnected sections receiving the floor, roof and side members of the vehicle assemblies, characterized in that the sections (10, 10', 13, 14, 21, 22) forming the supporting members (3, 4, 5, 23, 27, 29) of the structural framework (1) are made from steel and the sections (12, 25, 26, 28) forming the roof (2, 24) and the lateral envelope (28) are of aluminium.

2. Vehicle according to claim 1, characterized in that the sections (10, 10', 12, 13, 14, 25, 26) are fixed to one another by welding.

3. Vehicle according to claim 1 or 2, characterized in that transition couplings (15) are located at the joint or connection points (16) between the aluminium sections (12) and steel sections (13, 14).

4. Vehicle according to one of the claims 1 to 3, characterized in that the floor frame (3) of the structural framework (1) is fixed by screwing to a base frame (6) connected to the vehicle chassis (8).

5. Vehicle according to claim 4, characterized in that the base frame (6) is made from steel.

6. Vehicle according to one of the preceding claims, characterized in that the wall parts (17) are fixed by bonding to the structural framework (1).

7. Vehicle according to claim 6, characterized in that the bonding points (37, 40, 42) of the wall parts (17) comprise sections (30, 31, 32) made from different materials (aluminium, steel, plastic) and have different cross-sectional shapes, which have at least one leg (34, 35, 37, 38, 44, 45) bringing about a positive engagement in addition to the bonding surface.

8. Vehicle according to claim 6 or 7, characterized in that the wall parts (17) acquire their increased inherent rigidity by a detachable or non-detachable tying to sections (32).

## Revendications

1. Véhicule d'intervention, en particulier véhicule de pompiers, comportant un cadre de plancher et une ossature de carrosserie constituée de profilés solidarisés entre eux destinée à recevoir les éléments de plancher, de toit et de parois des structures des véhicules, caractérisé en ce que les éléments porteurs (3,4,5,23,27,29) des profilés (10,10',13,14,21,22) constituant l'ossature de carrosserie (1) sont en acier et en ce que les profilés (12,25,26,28) constituant le toit (2,24) ainsi que ceux de la protection (28) latérale sont en aluminium.

2. Véhicule selon la revendication 1, caractérisé en ce que les profilés (10,10',12,13,14,25,26) sont solidarisés les uns aux autres par soudage.

3. Véhicule selon la revendication 1 ou 2, caractérisé par des raccords à souder (15) solidarisés sur les zones de liaison ou nodales (16) entre les profilés (12) en aluminium et les profilés (13,14) en acier.

4. Véhicule selon l'une quelconque des revendications 1 à 3, caractérisé en ce que le cadre de plancher (3) de l'ossature de carrosserie (1) est fixé par vissage à un cadre de base (6) relié au châssis (8) du véhicule.

5. Véhicule selon la revendication 4, caractérisé en ce que le cadre de base (6) est en acier.

6. Véhicule selon l'une quelconque des revendications précédentes, caractérisé en ce que les éléments de parois (17) sont solidarisés par collage sur l'ossature de carrosserie (1).

7. Véhicule selon la revendication 6, caractérisé en ce que les zones de collage (37,40,42) des éléments de parois (17) sont constituées de profilés (30,31,32) de matériaux différents (aluminium, acier, matière synthétique) et de formes de section différentes, présentant, en plus de la surface de collage, au moins une aile (34,35,37,38,44,45) réalisant un engagement de butée à ajustement de forme.

8. Véhicule selon la revendication 6 ou 7, caractérisé en ce que l'augmentation de la rigidité propre des éléments de parois (17) est obtenue par une fixation amovible ou non amovible à des profilés (32).
